# EUROPÄISCHE PATENTSCHRIFT

(11) **EP 2 310 891 B1**
(45) Veröffentlichungstag und Bekanntmachung des Hinweises auf die Patenterteilung: **30.11.2011**
(21) Anmeldenummer: 09777413.7
(22) Anmeldetag: 24.07.2009
(51) Int. Cl.: G02B 21/22, G02B 21/24, G02B 23/24, G02B 5/00, G02F 1/00, G03B 9/08

(54) **VERFAHREN ZUR STEUERUNG VON APERTURBLENDEN**
METHOD FOR CONTROLLING APERTURE STOPS
PROCÉDÉ DE COMMANDE DE DIAPHRAGMES

(30) Priorität: 08.08.2008 DE 102008037074
(43) Veröffentlichungstag der Anmeldung: 20.04.2011
(73) Patentinhaber: Carl Zeiss MicroImaging GmbH, 07745 Jena (DE)
(72) Erfinder: MÖLLER, Gerhard, 37083 Göttingen (DE)
(74) Vertreter: Scholze, Humbert
(86) Internationale Anmeldenummer: PCT/EP2009/005375
(87) Internationale Veröffentlichungsnummer: WO 2010/015336

(56) Entgegenhaltungen:
- DE-A1-102005 040 473
- US-A- 3 488 104
- US-A- 5 896 223
- US-A1- 2005 168 809

## Beschreibung

Die Erfindung betrifft ein Verfahren zur Steuerung von Aperturblenden, das in Mikroskopen, Makroskopen und Endoskopen zur Optimierung der Beobachtungsparameter Auflösung und Schärfentiefe einer optischen Abbildung Anwendung findet, sowie eine Einrichtung zum Einstellen und zur Steuerung der Aperturblenden.

Für Mikroskope, insbesondere in der Stereomikroskopie und in der Makroskopie, ist das Auflösungsvermögen sowie die Schärfentiefe der optischen Abbildung von großer Bedeutung und durch die Apertur des optischen Systems begrenzt, wobei die Apertur allgemein durch die Öffnung einer Aperturblende festgelegt ist. Mit einer Aperturblende lassen sich die Parameter Auflösung und Schärfentiefe gegenläufig steuern, indem eine hohe Lichtstärke und ein hohes Auflösungsvermögen eine große Apertur erfordern, d.h. eine große Öffnung der Aperturblende und eine große Schärfentiefe erfordert eine kleine Apertur, d.h. eine kleine Öffnung der Aperturblende. Insbesondere in der Stereomikroskopie, der Makroskopie und der Endoskopie ist es für einen Gerätebenutzer notwendig, bei seiner visuellen Beobachtung von zu untersuchenden Objekten sowohl mit hoher Auflösung als auch mit hoher Schärfentiefe zu arbeiten und es ist vielfach erforderlich, zur Detailerkennung schnell auf hohe Vergrößerungen mit hoher Auflösung umzuschalten. Aus dem Stand der Technik sind Lösungen zur Optimierung der Auflösung und der Schärfentiefe von optischen Systemen durch Aperturblenden bekannt. So ist aus der DE 10 2004 006 066 B4 eine Blendenvorrichtung mit einer steuerbaren Aperturblende bekannt, die gemäß einer vorgegebenen Beziehung in Abhängigkeit vom gewählten Beobachtungsparameter, beispielsweise vom Vergrößerungsfaktor, eingestellt werden kann und beim Wechsel des Vergrößerungsfaktors gegenüber dem Stand der Technik automatisch gemäß der vorgegebenen Beziehung an den neu eingestellten Vergrößerungsfaktor angepasst wird. Dazu verändert die steuerbare Aperturblende im sogenannten schärfentiefeoptimierten Modus ihren Durchmesser in Abhängigkeit vom Vergrößerungswert des Zoomsystems und im auflösungsoptimierten Modus ist die Aperturblende offen. Auf Knopfdruck kann man dann zwischen beiden Zuständen wechseln, wobei beide Einstellungen der Aperturblende nur nacheinander gewählt werden können. In der DE 10 2005 040 473 B4 wird ein Stereomikroskop vom Teleskoptyp beschrieben, bei dem das Problem der Optimierung der Auflösung und der Schärfentiefe des optischen Systems für Stereomikroskope mit einem Stereostrahlengang dadurch gelöst wird, dass die Aperturen rechts und links im Strahlengang unterschiedlich sind, so dass bei der Verschmelzung des Stereobildes im Gehirn des Mikroskopbenutzers angenommen wird, gleichzeitig die hohe Schärfentiefe und die hohe Auflösung zu sehen. Der Nachteil besteht jedoch darin, dass sehr unterschiedliche Stereobilder in der Zwischenbildebene kein stereoskopisch sauberes Bild liefern und zu Kopfschmerzen bei einem Mikroskopbenutzer führen können. Außerdem kann diese technische Lösung nicht in ein Makroskop oder Endoskop eingebaut werden.

Ausgehend von diesem Stand der Technik liegt der Erfindung die Aufgabe zugrunde, ein Verfahren zur Steuerung von Aperturblenden zur Optimierung der Beobachtungsparameter Auflösung und Schärfentiefe einer optischen Abbildung sowie eine Einrichtung zur Einstellung und Steuerung der Aperturblende insbesondere für die Stereomikroskopie sowie die Makroskopie und Endoskopie zu schaffen, mittels denen ein Gerätebenutzer in kürzester Zeit optimale Bilder eines zu beobachtenden Objektausschnittes bezüglich Auflösung und Schärfentiefe erhält und gleichzeitig die Steuerung der Aperturblende einfach zu handhaben ist.

Zur Lösung dieser Aufgabe schlägt die Erfindung ein Verfahren zur Steuerung von Aperturblenden in Mikroskopen, Makroskopen und Endoskopen zur

Optimierung der Beobachtungsparameter Auflösung und Schärfentiefe einer optischen Abbildung vor, mit mindestens einer im Beobachtungsstrahlengang eines Mikroskops, Makroskops oder Endoskops angeordneten und als variierbares Transmissionsdisplay ausgebildeten Aperturblende mit einstellbarer Apertur, die so ausgebildet ist, dass sie ein von einer Steuereinheit ausgegebenes Apertursignal in Abhängigkeit vom jeweils einzustellenden Wert der Auflösung und Schärfentiefe empfängt und ein Gerätebenutzer ein schärfenoptimiertes und ein auflösungsoptimiertes Bild eines zu untersuchenden Objektausschnittes erhält, mit den Verfahrensschritten, dass die sich im lichtundurchlässigen Zustand befindlichen Pixel der als variierbares Transmissionsdisplay ausgebildeten Aperturblende mit einer variablen Frequenz in der Nähe der Flimmerfusionsfrequenz der Augen eines Gerätebenutzers so betrieben werden, dass den Augen des Gerätebenutzers im schnellen Wechsel nacheinander das schärfentiefeoptimierte und das auflösungsoptimierte Bild des zu untersuchenden Objektausschnittes so dargeboten wird, dass dem Gerätebenutzer beide Bilder auf der Netzhaut der Augen zeitlich gleich erscheinen und dass nachfolgend beide Bilder im Gehirn des Gerätebenutzers zu einem stehenden Bildeindruck verschmelzen.

Der Vorteil des erfindungsgemäßen Verfahrens besteht darin, dass auf beiden Augen des Gerätebenutzers im schnellen Wechsel nacheinander das schärfentiefeoptimierte und das auflösungsoptimierte Bild zeitlich gleich erscheinen, und dass das schärfentiefeoptimierte und das auflösungsoptimierte Bild symmetrisch auf der Netzhaut beider Augen erzeugt wird, so dass den Augen gleichzeitig immer Bilder optimaler Auflösung und Schärfentiefe angeboten werden und gegenüber den bekannten Verfahren zur Einstellung des Wertes eines Beobachtungsparameters einer Blendenanordnung kein zeitaufwendiges Umschalten zwischen dem schärfentiefeoptimierten und dem auflösungsoptimierten Bild notwendig ist.

Die als variierbares Transmissionsdisplay ausgebildete Aperturblende mit einstellbarer Apertur muss dabei zur Durchführung des erfindungsgemäßen Verfahrens immer die Bedingung erfüllen, dass sie beim Einsatz in Stereomikroskopen oder Makroskopen vorzugsweise nahe an dem Ort der engsten Einschnürung des Beobachtungsstrahlenganges angeordnet ist, der allen Zoomwerten am nächsten kommt.

Vorteilhaft ist, dass das als Aperturblende ausgebildete Transmissionsdisplay eine Vielzahl von Pixeln aufweist, die mit einer Steuereinheit digital ansteuerbar sind und sich je nach erhaltenem Steuersignal in einem lichtdurchlässigen oder lichtundurchlässigem Zustand befinden und damit unterschiedliche Aperturen erzeugbar sind, und dass die Steuersignale für die frequenzgesteuerte Aperturblende aus dem Zoomsystem detektiert und an die Steuereinheit weitergeleitet werden, wobei die einzustellenden Aperturen der Aperturblende in einem Speicher gespeichert und abrufbar sind.

Bevorzugt ist weiterhin, dass bei einem mit zwei Beobachtungsstrahlengängen ausgebildeten Stereomikroskop in jedem Beobachtungsstrahlengang entweder zwischen Teiloptiken eines Binokulars und optischen Teilsystemen eines Zoomsystems oder im Zoomsystem in jedem Beobachtungsstrahlengang jeweils mindestens eine Aperturblende angeordnet ist. Bei einem Makroskop mit einem einkanaligen Beobachtungsstrahlengang ist mindestens eine Aperturblende entweder zwischen dem Okular und dem optischen Zoomsystem oder im Zoomsystem angeordnet. Eine mögliche Variante ist, dass insbesondere für Stereomikroskope und Makroskope die Aperturblenden in den Beobachtungsstrahlengängen nicht im Zoomsystem, sondern als Zwischentubus ausgebildet sind.

Es ist weiterhin zweckmäßig, dass bei Betrieb der frequenzgesteuerten Blendeneinrichtung mit einer Videokamera und einem Monitor eine Synchronisation der Flimmerfrequenz der Aperturblenden mit der Videokamera und dem Monitor eingehalten wird. Mittels einer geeigneten Ansteuerung lassen sich unterschiedliche geometrische Formen der Aperturen ausführen.

Die Erfindung wird nachfolgend anhand von schematisch in Zeichnungen dargestellten Ausführungsbeispielen näher erläutert.

Es zeigen:
- Fig. 1: ein Ausführungsbeispiel eines Stereomikroskops mit erfindungsgemäßen frequenzgesteuerten Aperturblenden;
- Fig. 2: ein weiteres Ausführungsbeispiel eines Stereomikroskops mit frequenzgesteuerten Aperturblenden;
- Fig. 3: ein Ausführungsbeispiel eines Makroskops mit einer frequenzgesteuerten Aperturblende;
- Fig. 4: ein weiteres Ausführungsbeispiel eines Makroskops mit einer frequenzgesteuerten Aperturblende.

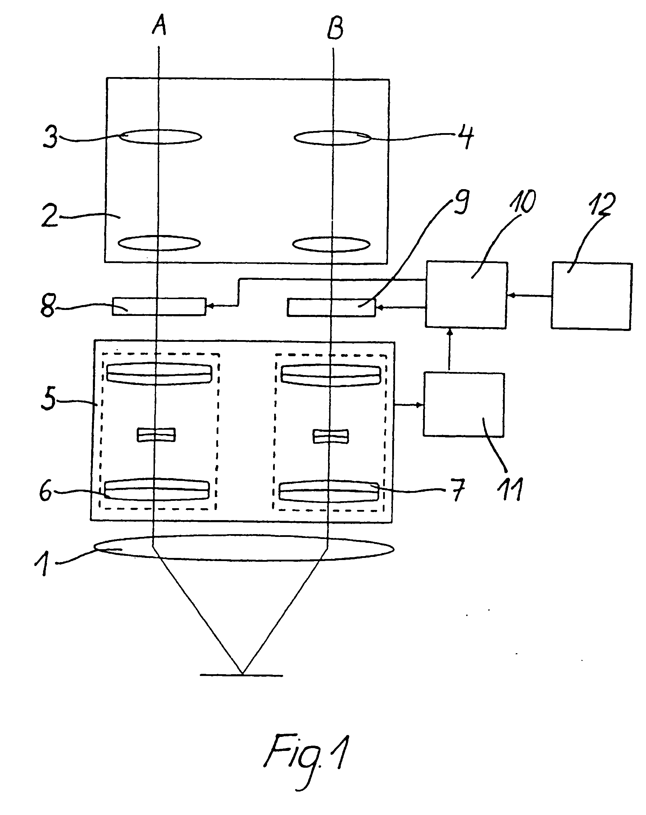

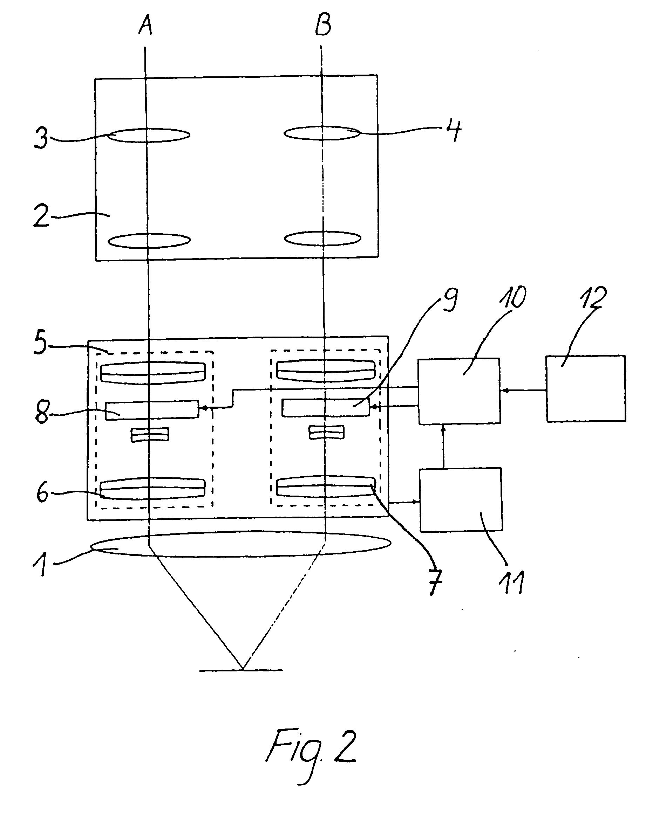

Die Figuren 1 und 2 zeigen eine schematische Darstellung eines Stereomikroskops, beispielsweise eines Operationsmikroskops mit zwei stereoskopischen Beobachtungsstrahlengängen A und B. Das Stereomikroskop umfasst ein Objektiv 1 und ein Binokular 2, welches aus zwei Teiloptiken 3,4 für die beiden Strahlengänge A und B des Stereomikroskops besteht, mit der Teiloptik 3 für den Strahlengang A und der Teiloptik 4 für den Strahlengang B. Zwischen dem Objektiv 1 im Strahlengang A und B und dem Binokular 2 ist ein Zoomsystem 5 angeordnet, mit dem sich die Vergrößerung des Stereomikroskops innerhalb eines bestimmten Bereichs stufenlos einstellen lässt. Das Zoomsystem 5 umfasst dabei für die Strahlengänge A und B optische Teilsysteme 6,7. In jedem Strahlengang A und B des Stereomikroskops ist dabei entweder zwischen Teiloptiken 3,4 des Binokulars 2 und den optischen Teilsystemen 6,7 des Zoomsystems 5 gemäß Figur 1 oder im Zoomsystem 5 gemäß Figur 2 jeweils mindestens eine erfindungsgemäße frequenzgesteuerte Aperturblende 8,9 angeordnet. Die Aperturblenden 8,9 sind in beiden Anordnungen in den stereoskopischen Beobachtungsstrahlengängen A,B mit einer Steuereinheit 10 und einem Speicher 12 verbunden. Die Aperturblenden 8,9 in dem Stereomikroskop sind dabei vorzugsweise nahe am Ort der engsten Einschnürung des Beobachtungsstrahlenganges A,B angeordnet, wobei diese Position von der Vergrößerung des Stereomikroskops abhängig ist, d.h. es muss ein Kompromiss gefunden werden, ein Ort, der der theoretischen Pupille für alle Zoomwerte am nächsten kommt. Die frequenzgesteuerten Aperturblenden 8,9 sind als variierbare Transmissionsdisplays ausgebildet und werden gemäß dem erfindungsgemäßen Verfahren zur Steuerung der Beobachtungsparameter Auflösung und Schärfentiefe mit einer variablen Frequenz in der Nähe der Flimmerfusionsfrequenz der Augen eines Mikroskopbenutzers, bei beispielsweise größer 25Hz bis gleich 30 Hz, so betrieben, dass den Augen des Mikroskopbenutzers im schnellen Wechsel nacheinander das schärfentiefeoptimierte und das auflösungsoptimierte Bild des zu untersuchenden Objektes dargeboten werden und beide Bilder im Gehirn des Mikroskopbenutzers zu einem stehenden Bildeindruck verschmelzen, wobei das schärfenoptimierte und das auflösungsoptimierte Bild symmetrisch auf der Netzhaut beider Augen des Gerätebenutzers erzeugt wird. Ein derartiges Transmissionsdisplay 8,9 kann beispielsweise als Flüssigkristalldisplay (LCD: Liquid Crystal Display) ausgebildet sein. Ein Flüssigkristalldisplay 8,9 weist eine Vielzahl von Pixeln auf, die mit einer Steuereinheit 10 digital ansteuerbar sind und sich je nach erhaltenem Steuersignal in einem lichtdurchlässigen oder lichtundurchlässigen Zustand befinden. Die Flüssigkristalldisplays 8,9 weisen dazu einen zentralen Bereich mit Pixeln im lichtdurchlässigen Zustand auf und periphere Pixel im lichtundurchlässigen Zustand. Die sich im lichtundurchlässigen Zustand befindlichen Pixel der Flüssigkristalldisplays 8,9 werden mit einer variablen Frequenz in der Nähe der Flimmerfusionsfrequenz des Auges, beispielsweise etwa 30 Hz angesteuert. Mittels einer geeigneten Ansteuerung durch eine Steuereinheit 10 lassen sich eine Vielzahl unterschiedlicher Aperturen realisieren. Die Steuereinheit 10 steht einerseits mit einem Detektor 11 in Verbindung, der den eingestellten Zoomfaktor ermittelt und an die Steuereinheit 10 weiterleitet und anderseits mit einem Speicher 12 in Verbindung, in dem die Beziehungen zwischen Zoomfaktor und einzustellenden Aperturen festgelegt sind, die einem bestimmten Zoomfaktor eine einzustellende Apertur zuweisen. Mittels einer geeigneten Ansteuerung lassen sich unterschiedliche geometrische Aperturen ausführen.

Als ein nicht näher dargestelltes Ausführungsbeispiel kann als Variante auch vorgesehen werden, dass insbesondere für Stereomikroskope als auch für Makroskope die Aperturblenden in den Beobachtungsstrahlengängen nicht im Zoomsystem vorgesehen, sondern als Zwischentubus ausgebildet sind.

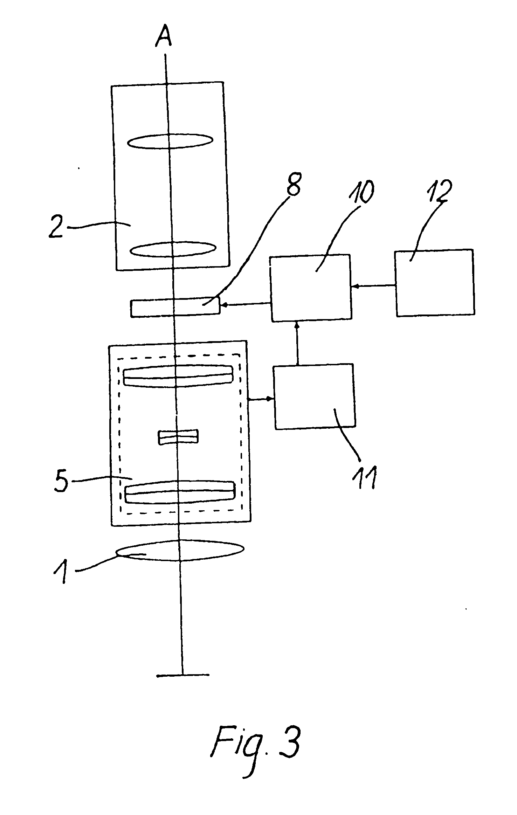

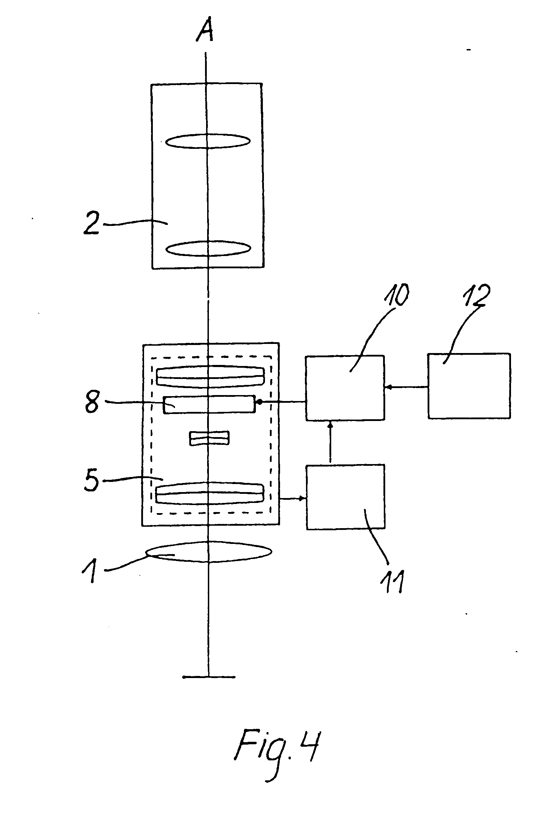

Die Figuren 3 und 4 zeigen ein Makroskop mit einem einkanaligen Beobachtungsstrahlengang A, bei dem die frequenzgesteuerte Aperturblende 8 in dem Beobachtungsstrahlengang A entweder zwischen dem Okular 2 und dem optischen Zoomsystem 5 gemäß Figur 3 oder im Zoomsystem 5 gemäß Figur 4 angeordnet ist, wobei die Aperturblende 8 ebenfalls wie bei Mikroskopen insbesondere nahe am Ort der engsten Einschnürung des Beobachtungsstrahlenganges A angeordnet ist und ebenfalls mit der Steuereinheit 10 und dem Speicher 12 verbunden ist.

Bei Betrieb der frequenzgesteuerten Aperturblenden 8,9 mit einer Videokamera und einem Monitor hat eine Synchronisation der Flimmerfrequenz der Aperturblenden mit der Videokamera und dem Monitor zu erfolgen.

Die Erfindung beschränkt sich nicht auf die Ausführungsbeispiele, sondern ist in der Ausgestaltung und Ansteuerung der Aperturblenden als Transmissionsdisplays variabel. Die Erfindung wird durch die angehängten Patentansprüche definiert.

### Bezugszeichenliste

- 1: Objektiv
- 2: Okular,Binokular
- 3: Teiloptik des Binokulars
- 4: Teiloptik des Binokulars
- 5: Zoomsystem
- 6: optisches Teilsystem des Zoomsystems
- 7: optischesTeilsystem des Zoomsystems
- 8: Aperturblende
- 9: Aperturblende
- 10: Steuereinheit
- 11: Detektor
- 12: Speicher

## Patentansprüche

1. Verfahren zur Steuerung von Aperturblenden in Mikroskopen, Makroskopen und Endoskopen zur Optimierung der Beobachtungsparameter Auflösung und Schärfentiefe einer optischen Abbildung, mit mindestens einer im Beobachtungsstrahlengang eines Mikroskops, Makroskops oder Endoskops angeordneten und als variierbares Transmissionsdisplay ausgebildeten Aperturblende mit einstellbarer Apertur, die so ausgebildet ist, dass sie ein von einer Steuereinheit ausgegebenes Apertursignal in Abhängigkeit vom jeweils einzustellenden Wert der Auflösung und Schärfentiefe empfängt und ein Gerätebenutzer ein schärfentiefeoptimiertes und ein auflösungsoptimiertes Bild eines zu untersuchenden Objektausschnittes erhält, **mit den Verfahrensschritten**, dass die sich im lichtundurchlässigen Zustand befindlichen Pixel der als variierbares Transmissionsdisplay ausgebildeten Aperturblende (8,9) mit einer variablen Frequenz in der Nähe der Flimmerfusionsfrequenz der Augen eines Gerätebenutzers betrieben werden, dass den Augen des Gerätebenutzers im schnellen Wechsel nacheinander das schärfentiefeoptimierte und das auflösungsoptimierte Bild des zu untersuchenden Objektausschnittes so dargeboten wird, dass dem Gerätebenutzer beide Bilder auf der Netzhaut der Augen zeitlich gleich erscheinen und dass nachfolgend beide Bilder im Gehirn des Gerätebenutzers zu einem stehenden Bildeindruck verschmelzen.

2. Verfahren zur Steuerung von Aperturblenden nach Anspruch 1,
**dadurch gekennzeichnet,**
**dass** das schärfentiefeoptimierte und das auflösungsoptimierte Bild symmetrisch auf der Netzhaut der beiden Augen des Gerätebenutzers erzeugt wird.

3. Verfahren zur Steuerung von Aperturblenden nach den Ansprüchen 1 und 2, **dadurch gekennzeichnet, dass** die variable Frequenz bei 30 Hz liegt.

4. Verfahren zur Steuerung von Aperturblenden nach den Ansprüchen 1 bis 2, **dadurch gekennzeichnet, dass** mittels der als Transmissionsdisplay ausgebildeten frequenzgesteuerten Aperturblenden (8,9) unterschiedliche geometrische Formen der Apertur ausführbar sind.

5. Verfahen zur Steuerung von Aperturblenden nach den vorstehenden Ansprüchen gekennzeichnet, dass die die frequenzgesteuerten Aperturblenden (8,9) mit einer Videokamera und einem Monitor gekoppelt sind, wobei eine Synchronisation der Flimmerfrequenz der Aperturblenden (8,9) mit der Videokamera und dem Monitor einzuhalten ist.

## Claims

1. Method for controlling aperture stops in microscopes, macroscopes and endoscopes to optimize the observation parameters of resolution and depth of focus of an optical image, having at least one aperture stop which is arranged in the observation beam path of a microscope, macroscope or endoscope, is designed as a variable transmission display, has an adjustable aperture and is designed such that it receives an aperture signal, output by a control unit, as a function of the value respectively to be set for the resolution and depth of focus, and that an equipment user obtains an image of an object section to be examined, which image is optimized for depth of focus and resolution, having the method steps that the pixels in the non-transparent state of the aperture stop (8, 9) designed as a variable transmission display are operated at a variable frequency in the vicinity of the flicker fusion frequency of the eyes of an equipment user, that the image of the object section to be examined is offered to the eyes of the equipment user successively in a fashion changing quickly and optimized for depth of focus and resolution, so that the two images appear to the equipment user simultaneously on the retina of the eyes, and that the two images are subsequently fused in the brain of the equipment user to form a stationary image impression.

2. Method for controlling aperture stops according to Claim 1, **characterized in that** the image optimized for depth of focus and resolution is produced symmetrically on the retina of both eyes of the equipment user.

3. Method for controlling aperture stops according to Claims 1 and 2, **characterized in that** the variable frequency is at 30 Hz.

4. Method for controlling aperture stops according to Claims 1 to 2, **characterized in that** different geometric shapes of the aperture can be implemented by means of the frequency-controlled aperture stops (8, 9) formed as transmission display.

5. Method for controlling aperture stops according to the preceding claims, **characterized in that** the frequency-controlled aperture stops (8, 9) are coupled to a video camera and a monitor, it being necessary to maintain a synchronization for the flicker frequency of the aperture stops (8, 9) with the video camera and the monitor.

## Revendications

1. Procédé de commande de diaphragmes d'ouverture dans des microscopes, macroscopes et endoscopes pour l'optimisation des paramètres d'observation de résolution et de profondeur de champ d'une représentation optique, avec au moins un diaphragme d'ouverture à ouverture réglable disposé dans le chemin de faisceau d'observation d'un microscope, macroscope ou endoscope et réalisé sous la forme d'un afficheur à transmission variable, réalisé de manière à recevoir un signal d'ouverture émis par une unité de commande en fonction de la valeur respective de la résolution et de la profondeur de champ à régler et à fournir à l'utilisateur de l'appareil, une image optimisée en profondeur de champ et optimisée en résolution d'une coupe d'un objet à examiner, avec les étapes suivantes du procédé consistant à actionner les pixels se trouvant dans l'état non transparent à la lumière, du diaphragme d'ouverture (8, 9) réalisé sous la forme d'un afficheur à transmission variable, à une fréquence variable proche de la fréquence d'intégration du scintillement des yeux d'un utilisateur de l'appareil, à présenter aux yeux de l'utilisateur de l'appareil, en alternance successive rapide, l'image optimisée en profondeur de champ et l'image optimisée en résolution d'une coupe d'un objet à examiner, de telle sorte que pour l'utilisateur de l'appareil, les deux images apparaissent simultanément sur la rétine des yeux et qu'ensuite les deux images fusionnent dans le cerveau de utilisateur de l'appareil en une impression d'image immobile.

2. Procédé de commande de diaphragmes d'ouverture selon la revendication 1, **caractérisé en ce que** l'image optimisée en profondeur de champ et l'image optimisée en résolution sont générées symétriquement sur la rétine des deux yeux de l'utilisateur de l'appareil.

3. Procédé de commande de diaphragmes d'ouverture selon les revendications 1 et 2, **caractérisé en ce que** la fréquence variable se situe aux alentours de 30 Hz.

4. Procédé de commande de diaphragmes d'ouverture selon les revendications 1 et 2, **caractérisé en ce qu'**il est possible de réaliser différentes formes géométriques de l'ouverture au moyen des diaphragmes d'ouverture (8, 9) réalisés sous la forme d'afficheurs à transmission commandés par fréquence.

5. Procédé de commande de diaphragmes d'ouverture selon les revendications précédentes, **caractérisé en ce que** les diaphragmes d'ouverture (8, 9) commandés par fréquence sont couplés à une caméra vidéo et un moniteur, une synchronisation de la fréquence de scintillement des diaphragmes d'ouverture (8, 9) avec la caméra vidéo et le moniteur étant nécessaire.
